# EUROPÄISCHE PATENTANMELDUNG

(11) **EP 0 849 540 A2**
(43) Veröffentlichungstag der Anmeldung: **24.06.1998**
(21) Anmeldenummer: 97104306.2
(22) Anmeldetag: 13.03.1997
(51) Int. Cl.: F24D 3/10

(54) **Kugelhahn**

(30) Priorität: 17.12.1996 DE 19652565
(71) Anmelder: Gebr. Tuxhorn GmbH & Co. KG, 33647 Bielefeld (DE)
(72) Erfinder: Steinmeyer, Norbert, 32791 Lage (DE)
(74) Vertreter: Laufhütte, Dieter, Dr.-Ing.

(57) **Zusammenfassung**

Die Erfindung betrifft einen Kugelhahn mit zwei Bauteilen, insbesondere einem Oberteil und einem Unterteil, wobei die Bauteile gegeneinander verdrehbar sind.

## Beschreibung

Die vorliegende Erfindung betrifft einen Kugelhahn nach dem Oberbegriff des Anspruchs 1, ein Heizungssystem nach dem Oberbegriff des Anspruchs 7 sowie einen Betätigungsgriff für ein Sperrelement nach Anspruch 10.

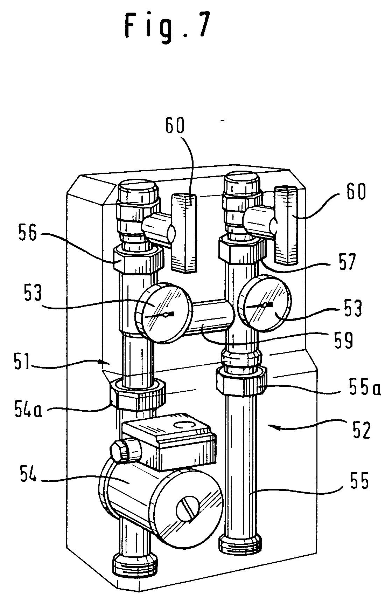

Ein herkömmliches Vor- und Rücklaufsystem einer Heizkreisgruppe wird unter Bezug auf Fig. 7 beschrieben. Das in Fig. 7 dargestellte System weist ein Vorlaufrohr 51 und ein Rücklaufrohr 52 auf. In den Rohren 51, 52 sind Kugelhahne vorgesehen. In Höhe des Verbindungselements 59 sind Zeigerthermometer 53 angeordnet. Zum Austausch des Vor- und Rücklaufes des Systems ist es möglich, Rohre 51 und 52 in ihrer Position miteinander zu vertauschen. Hierzu sind zunächst die Überwurfmuttern 54a, 55a zu lösen, die Rohr 51 mit Umwälzpumpe 54, bzw. Rohr 52 mit Pumpenausgleichsrohr 55 verbinden. Das aus Rohren 51, 52 und dem Verbindungselement 59 bestehende Modul muß um eine senkrechte Achse um 180° gedreht werden. Ferner müssen Umwälzpumpe 54 und Pumpenausgleichsrohr 55 in ihren Positionen vertauscht werden. Nach Drehung des aus den Rohren 51, 52 und dem Verbindungselement 59 bestehenden Moduls um 180° sind sowohl die Zeigerthermometer 53 als auch die Betätigungselemente 60 der Kugelhähne nach hinten gerichtet. Es müssen daher die Zeigerthermometer 53 einschließlich ihrer Tauchhülsen und hinteren Stopfen ausgeschraubt und umgekehrt positioniert werden. Ferner müssen die Überwurfmuttern 56, 57 der Kugelhähne gelöst werden, so daß die Kugelhähne einschließlich ihrer Betätigungselemente 60 180° um ihre eigene Achse gedreht werden können. Schließlich müssen sämtliche Überwurfmuttern, Tauchhülsen und Stopfen wieder fest angezogen werden. Dieser Umbau erweist sich in der Praxis als sehr zeitaufwendig.

Ferner bauen herkömmliche Kugelhähne sehr groß, wodurch der Platzbedarf eines Heizungssystems insgesamt groß ist.

Aufgabe der Erfindung ist es daher, Kugelhähne und ein Heizungssystem zur Verfügung zu stellen, bei welchen die oben beschriebene, aufwendige Umbaumontage vereinfacht ist, und ferner die Bauhöhe verringert ist.

Diese Aufgabe wird gelöst durch einen Kugelhahn gemäß Patentanspruch 1, ein Heizungssystem gemäß Patentanspruch 7 und einen Betätigungsgriff gemäß Patentanspruch 10. Erfindungsgemäß ist nun der Wechsel von Vor- und Rücklauf in einem Heizsystem, insbesondere einer Heizkreisgruppe, stark vereinfacht, da ein Lösen der Überwurfmuttern der Kugelhahne nicht mehr notwendig ist. Die Kugelhähne sind nun durch einfache Betätigung verschwenkbar. Hierdurch ist der Arbeitsaufwand beim Umbau des Systems vermindert. Ferner ist ein derart kompaktes, mehrere Funktionen erfüllendes Baute gegenüber herkömmlichen Bauteilen in der Bauhöhe reduziert.

Vorteilhafte Ausgestaltungen der Erfindung sind Gegenstand der Unteransprüche.

Zweckmäßigerweise sind die die Kugelhahn bildenden Bauteile aufeinander aufsteckbar. Hierdurch ist eine besonders einfache Montage bzw. Demontage möglich.

Zweckmäßigerweise ist an dem Ober- oder Unterteil des Kugelhahns eine Anzeigevorrichtung, insbesondere ein Zeigerthermometer, angebracht. Hierdurch ist es möglich, die Anzeigevorrichtung ebenfalls durch eine entsprechende Schwenkbewegung in die gewünschte Position zu bringen. Das bislang notwendige Ausschrauben der Tauchhülsen und Stopfen, und der umgekehrte Wiedereinbau der Anzeigevorrichtung entfällt.

Besonders bevorzugt ist, die Anzeigevorrichtung in einer Betätigungseinrichtung zum Öffnen oder Schließen des Kugelhahns auszubilden. Hierdurch entfällt die Nebeneinander- bzw. Übereinanderanordnung von Betätigungsvorrichtung und Anzeigevorrichtung, so daß das Bauvolumen des Systems insgesamt verringert ist.

Besonders bevorzugt ist, die Betätigungsvorrichtung als Kugelgriff oder Halbkugelgriff auszubilden. In einen derartigen Kugel- oder Halbkugelgriff ist eine Anzeigevorrichtung, insbesondere ein Zeigerthermometer, in einfacher Weise integrierbar. Das Zeigerthermometer ist durch den ihn umgebenden Halbkugel- bzw. Kugelgriff wirksam beispielsweise gegen mechanische Einwirkungen geschützt.

Nach einer weiteren vorteilhaften Ausgestaltung ist im Unterteil des Kugelhahns eine Schwerkraftbremse integriert. Derartige Schwerkraftbremsen sind grundsätzlich bereits bekannt. Sie dienen einerseits zur Verhinderung der Fehlzirkulation im Heizkreissystem. Andererseits dienen sie dazu, daß während des Sommerbetriebes bei abgeschalteter Zirkulationspumpe des Heizungssystems eine Erwärmung des Heizungswassers in den Heizkörpern durch Schwerkraftzirkulation unterbunden wird.

Gemäß einer vorteilhaften Ausbildung des Heizungssystems sind die Unterteile oder die Oberteile der Kugelhähne durch ein Verbindungselement starr miteinander verbunden. Dieses Verbindungselement dient zur Stabilisierung der nebeneinander verlaufenden Rohre des Heizungssystems.

Zweckmäßigerweise verlaufen die Vorlauf- und Rücklaufrohre im wesentlichen parallel zueinander und das Verbindungselement im wesentlichen senkrecht hierzu.

Gemäß einer vorteilhaften Ausgestaltung des Drehgriffs weist dieser eine mit Noppen und/oder Ausnehmungen versehene Oberfläche auf. Dies ermöglicht eine besonders einfache manuelle Betätigung des Kugelhahns, sowohl bei der Verdrehung von Ober- und Unterteil gegeneinander, als auch beim Öffnen oder Schließen des Kugelhahns.

Eine bevorzugte Ausführungsform der Erfindung wird nun anhand der beigefügten Zeichnungen im einzelnen erläutert. Es zeigt:
- Fig. 1: eine schematische Darstellung zur Erläuterung des Wechsels von Vor- und Rücklauf,
- Fig. 2: eine seitliche Schnittansicht eines im Vorlauf verwendbaren Kugelhahns,
- Fig. 3: eine seitliche Schnittansicht eines im Rücklauf verwendbaren Kugelhahns und
- Fig. 3a:: einen Teilabschnitt durch das zugehörige Unterteil,
- Fig. 4: eine seitliche Ansicht eines Kugelhahns mit daran angebrachtem Kugelgriff,
- Fig. 5: eine (teilweise schematische) Vorderansicht eines Heizungssystems mit Vor- und Rücklauf,
- Fig. 6: zwei Ansichten eines erfindungsgemäßen Kugelgriffs, und
- Fig. 7: eine perspektivische Ansicht eines Heizkreissystems gemäß dem Stand der Technik.

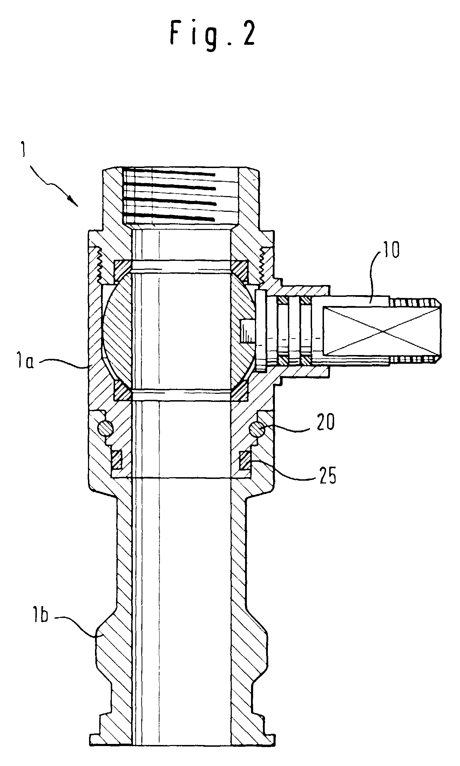

In Fig. 2 ist ein im Vorlauf verwendbarer Kugelhahn 1 dargestellt. Kugelhahn 1 weist ein oberes Teil 1a und ein hiermit über einen Sprengring 20 und einen O-Ring 30 drehbar verbundenes unteres Teil 1b auf. Durch Betätigung des (teilweise dargestellten) Betätigungselementes 10 ist der Kugelhahn zu öffnen oder zu verschließen.

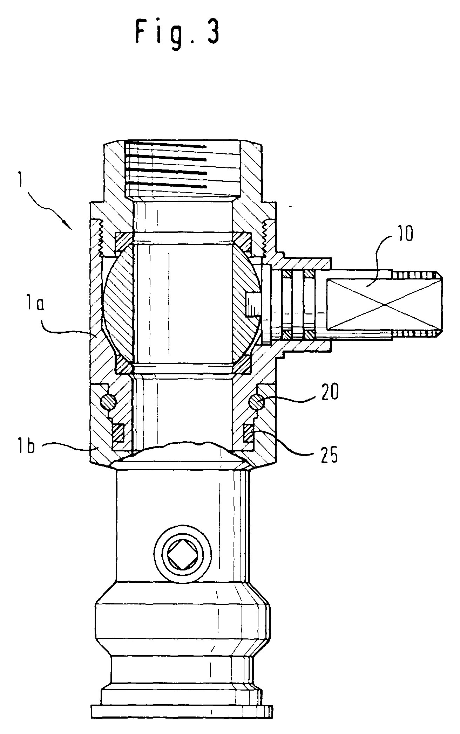

In Fig. 3 ist ein entsprechender Kugelhahn für den Rücklauf dargestellt. Auch dieser Kugelhahn ist mit einem oberen Teil 1a und einem unteren Teil 1b ausgebildet, welche mittels eines Sprengrings 20 und eines O-Rings 30 drehbar miteinander verbunden sind. Auch hier ist ein (teilweise dargestelltes) Betätigungselement 10 zum Öffnen bzw. Schließen des Kugelhahns vorgesehen. Im Schnitt gemäß Fig. 3a ist mit 40 eine im Unterteil 1b integrierte Schwerkraftbremse 40 dargestellt, deren prinzipieller Aufbau und Wirkungsweise bekannt ist.

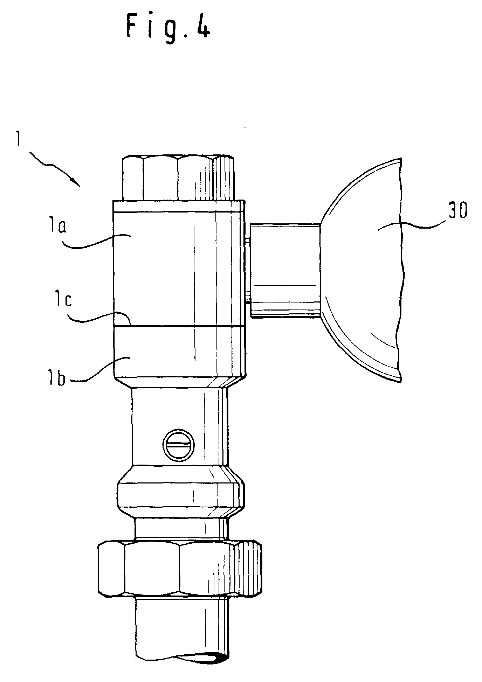

In Fig. 4 ist in seitlicher Ansicht ein Kugelhahn entsprechend Fig. 2 oder Fig. 3 dargestellt. Man erkennt, daß an dem Betätigungselement 10 ein Kugelgriff 30 angebracht ist. Ferner ist die Schnittstelle zwischen den gegeneinander verdrehbaren Teilen 1a, 1b mit 1c bezeichnet.

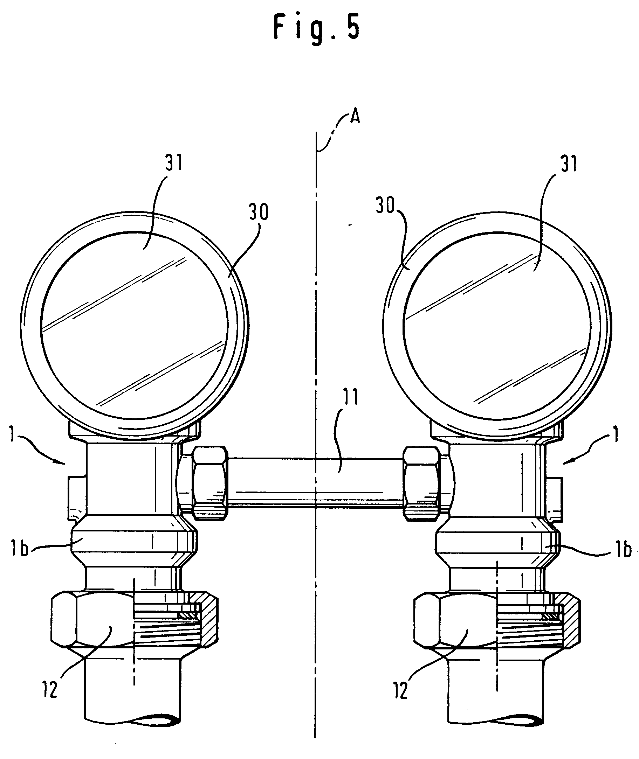

Fig. 5 zeigt eine Ansicht eines einen Vorlauf und einen Rücklauf aufweisenden Heizungssystems von vorne. Zwischen den beiden Kugelhähnen 1 ist ein die jeweiligen unteren Teilen 1b starr verbindendes Verbindungselement 11 vorgesehen.

Kugelgriffe 30, welche auf den (in Fig. 5 im wesentlichen verdeckten) oberen Teilen 1a angebracht sind, weisen ein (im einzelnen nicht dargestelltes) Zeigerthermometer 31 auf.

Ferner sind Überwurfmuttern 12 vorgesehen, welche zur Verbindung der Kugelhähne mit Anschlußelementen, beispielsweise einer Umwälzpumpe oder einem Pumpenausgleichrohr, dienen.

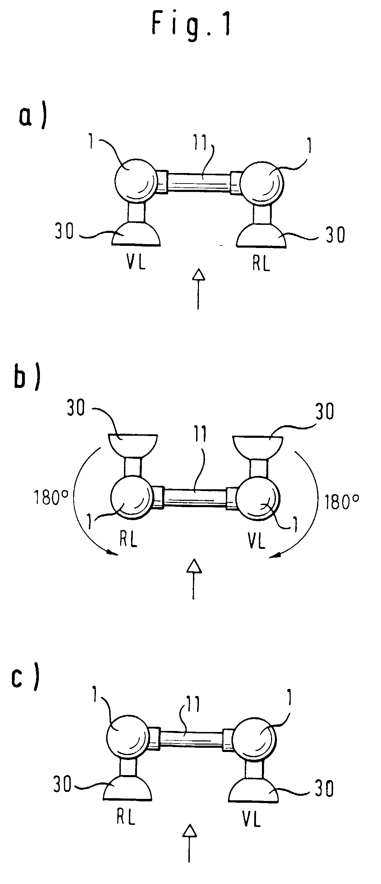

Unter Bezugnahme auf Fig. 5 in Zusammenschau mit Fig. 1 soll nun der unter Verwendung der erfindungsgemäßen Kugelhähne durchführbare Wechsel von Vorlauf und Rücklauf erläutert werden.

Fig. 1 stellt eine schematische Ansicht eines einen Vor- und Rücklauf aufweisenden Heizungssystems von oben dar.

Zunächst werden zum Wechsel von Vor- und Rücklauf die Kugelhähne 1 um eine durch den Mittelpunkt des Verbindungselements 11 verlaufende, zur Zeichenebene senkrechte Achse, in der Zeichenebene um 180° gedreht. Die Kugelhähne befinden sich nun im in Fig. 1b dargestellten Zustand.

Da einem Betreiber oder Benutzer das System in Richtung der in Figuren 1a bis 1c eingezeichneten Pfeile zugänglich ist, müssen die Kugelgriffe 30, in welche vorteilhafterweise Zeigerthermometer 31 integriert sind, jeweils um senkrecht zur Zeichenebene durch die Kugelhähne 1 verlaufende Achsen um 180° gedreht werden, wie dies in Fig. 1b mittels der bogenförmigen Pfeile angedeutet ist. Das System erreicht durch diese Drehung den in Fig. 1c dargestellten Zustand, in welchem die Kugelgriffe 30 wieder in Richtung eines Benutzers ausgerichtet sind.

Unter Bezug auf Fig. 5 entspricht dies einer Drehung um die eingezeichnete Achse A, und anschließend eine Drehung der Kugelgriffe 30 um durch die jeweiligen Mittelachsen der Kugelhähne parallel zur Achse A verlaufende Achsen.

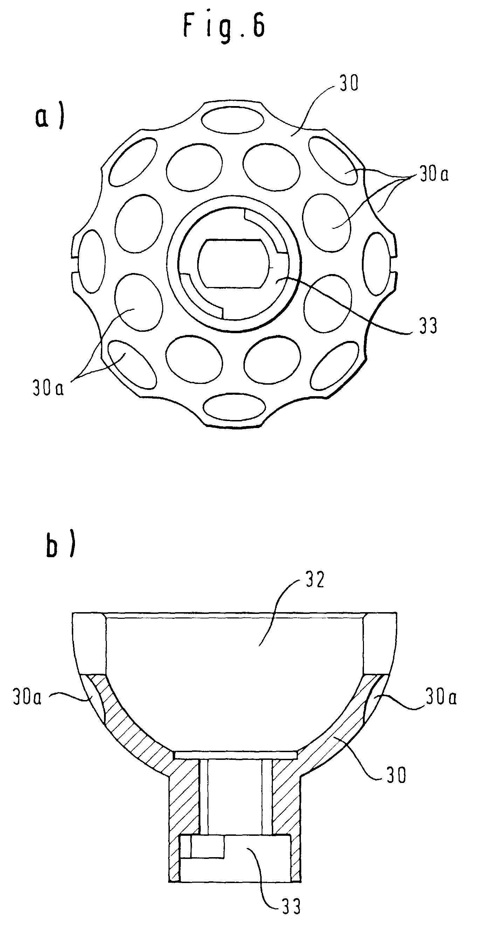

In Fig. 6 sind Ansichten eines bevorzugt verwendeten Kugelgriffs dargestellt. Fig. 6a zeigt eine Ansicht des Kugelgriffs von unten, das heißt bei Anbringung an einen Kugelhahn 1 aus der Richtung dieses Kugelhahns 1. Bevorzugt ist die Oberfläche des Kugelgriffs mit Noppen oder Ausnehmungen 30a ausgebildet, um eine optimale Betätigung des Kugelgriffs zu gewährleisten. In Fig. 6b ist eine seitliche Schnittansicht des Kugelgriffs dargestellt. Der Kugelgriff 30 ist mit einer zentralen Ausnehmung 32 versehen, in welche ein Anzeigeelement, insbesondere ein Zeigerthermometer, integrierbar ist. Mit der unteren Ausnehmung 33 ist der Kugelgriff auf das beispielsweise in Fig. 2 oder 3 dargestellte Element 10 aufschiebbar und auf diesem arretierbar. Durch Ausnehmung 33 sind ebenfalls Verbindungsmittel zur Verbindung eines beispielsweise im Vorlauf- oder Rücklaufrohr angebrachten Temperatursensors mit dem in Ausnehmung 32 angeordneten Zeigerthermometer durchführbar.

Das für den Kugelgriff verwendete Material weist bevorzugt eine Dauertemperaturbeständigkeit von 90° C auf.

## Patentansprüche

1. Kugelhahn mit zwei Bauteilen, insbesondere einem Oberteil (1a) und einem Unterteil (1b),
**dadurch gekennzeichnet,**
daß die Bauteile (1a, 1b) gegeneinander verdrehbar sind.

2. Kugelhahn nach Anspruch 1, dadurch gekennzeichnet, daß die Bauteile (1a, 1b) aufeinander aufsteckbar sind.

3. Kugelhahn nach Anspruch 1 oder 2, dadurch gekennzeichnet, daß am Ober- oder Unterteil (1a, 1b) eine Anzeigevorrichtung (31), insbesondere ein Zeigerthermometer, angebracht ist.

4. Kugelhahn nach Anspruch 3, dadurch gekennzeichnet, daß die Anzeigevorrichtung (31) in einer Betätigungsvorrichtung (30) zum Öffnen oder Schließen des Kugelhahns ausgebildet ist.

5. Kugelhahn nach Anspruch 4, dadurch gekennzeichnet, daß die Betätigungsvorrichtung (30) als Kugelgriff oder Halbkugelgriff ausgebildet ist.

6. Kugelhahn nach einem der Ansprüche 1-5, dadurch gekennzeichnet, daß in seinem Unterteil (1b) eine Schwerkraftbremse (40) integriert ist.

7. Heizungssystem, insbesondere für eine Heizkreisgruppe; mit einem ein erstes Heizungsrohr aufweisenden Vorlauf und einem ein zweites Heizungsrohr aufweisenden Rücklauf,
**dadurch gekennzeichnet,**
daß Vorlauf und/oder Rücklauf wenigstens einen Kugelhahn nach einem der Ansprüche 1 bis 6 aufweisen.

8. Heizungssystem nach Anspruch 7, gekennzeichnet durch ein die Unterteile (1b) oder die Oberteile (1a) der Kugelhähne starr miteinander verbindendes Verbindungselement (11).

9. Heizungssystem nach einem der Ansprüche 7 oder 8, dadurch gekennzeichnet, daß die Vor- und Rücklaufrohre im wesentlichen parallel zueinander verlaufen, und das Verbindungselement (11) hierzu im wesentlichen senkrecht verläuft.

10. Betätigungsgriff für einen Kugelhahn nach einem der Ansprüche 1 bis 6, dadurch gekennzeichnet, daß in dem Betätigungsgriff eine Anzeigeeinrichtung, insbesondere ein Zeigerthermometer, integrierbar ist.

11. Betätigungsgriff nach Anspruch 10, dadurch gekennzeichnet, daß seine Oberfläche mit Noppen und/oder Ausnehmungen (30a) ausgebildet ist.
